(19) Europäisches Patentamt
European Patent Office
Office européen des brevets

(11) EP 1 272 496 B1

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(21) Anmeldenummer: **01921345.3**

(22) Anmeldetag: **20.03.2001**

(51) Int Cl.[7]: **C07F 5/06**, C07F 5/02

(86) Internationale Anmeldenummer:
**PCT/EP2001/003161**

(87) Internationale Veröffentlichungsnummer:
**WO 2001/077117 (18.10.2001 Gazette 2001/42)**

(54) **VERFAHREN ZUR HERSTELLUNG VON ALKALIMETALLMONOHYDRIDO-BORANATEN UND -ALUMINATEN**

METHOD FOR PRODUCING ALKALI METAL MONOHYDRIDOBORATES AND MONOHYDRIDOALUMINATES

PROCEDE DE PRODUCTION DE MONOHYDRIDOBORANATES ET MONOHYDRIDOALUMINATES DE METAL ALCALIN

(84) Benannte Vertragsstaaten:
**AT BE CH CY DE DK ES FI FR GB GR IE IT LI LU MC NL PT SE TR**

(30) Priorität: **05.04.2000 DE 10016802**

(43) Veröffentlichungstag der Anmeldung:
**08.01.2003 Patentblatt 2003/02**

(73) Patentinhaber: **Chemetall GmbH
60487 Frankfurt am Main (DE)**

(72) Erfinder:
- **WIETELMANN, Ulrich
61381 Friedrichsdorf (DE)**
- **HAUK, Dieter
61169 Friedberg (DE)**
- **MAJDALANI, Dr. André
61476 Kronberg (DE)**
- **LISCHKA, Uwe
60437 Niedereschbach (DE)**

(74) Vertreter: **Uppena, Franz, Dr. et al
Dynamit Nobel AG
Patente, Marken & Lizenzen
53839 Troisdorf (DE)**

(56) Entgegenhaltungen:
- **H.C. BROWN: "Addition compounds of alkali metal hydrides" JOURNAL OF THE AMERICAN CHEMICAL SOCIETY, Bd. 100, Nr. 11, 1978, Seiten 3343-3349, XP002168164 in der Anmeldung erwähnt**
- **R. KÖSTER: "Houben-Weil - Methoden der Organischen Chemie Teil 3, Band 13: Hydro-triorgano-borate aus Triorganoboranen" 1983 , THIEME VERLAG , STUTTGART, DE XP002168165 in der Anmeldung erwähnt Seite 804 -Seite 809**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von Alkalimetallmonohydridoboranaten, und -aluminaten der allgemeinen Formel

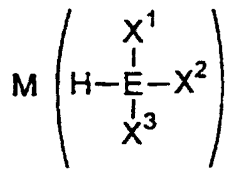

(A)

wobei M = Li, Na, K, Rb oder Cs ist, und
E = B oder Al ist, und
$X^1$, $X^2$, $X^3$ = jeweils unabhängig voneinander
eine aus 2 bis 10 C-Atomen bestehende sekundäre oder tertiäre Alkylgruppe ist, oder
eine Phenylgruppe, die ihrerseits alkylsubstituiert sein kann, ist, oder eine Alkoxygruppe ist.

Alkalimetallmonohydridoboranate, und -aluminate sind zum Teil bekannte Verbindungsklassen, deren Mitglieder Anwendungen als Reagenzien in der chemischen Synthese, z.B. als Reduktionsmittel, gefunden haben. So wird z.B. das kommerziell verfügbare Lithium-tri-tert-butoxyaluminiumhydrid zur chemoselektiven Reduktion von Säurechloriden zu Aldehyden oder zur stereoselektiven Reduktion von unsymmetrisch substituierten oder cyclischen Ketonen zu Alkoholen eingesetzt. (P. Galatsis, "Lithium-tri-tert-butoxyaluminiumhydrid" in L.A. Paquette, Encyclopeidia of Reagents for Organic Synthesis, J. Wiley & Sons, Chichester 1995, S. 3168 - 3172).

In ähnlicher Weise dienen auch Trialkylborhydride als vielseitig verwendbare Reduktionsmittel in der organischen Synthese. Im allgemeinen nimmt deren Stereosetektivität mit dem sterischen Anspruch der Alkylsubstituenten zu. (H.C. Brown, S. Krishnamurthy, J.L. Hubbard, J. Am. Chem. Soc. 1978, 100, 3343; R. Köster, "Anionische Organobor-Wasserstoff-Verbindungen" in: Houben-Weyl, Methoden der organischen Chemie 13/3b, S. 798-813, G. Thieme Verlag, Stuttgart, 1983; J.L. Hubbard, "Lithium tri-s-butylborohydride" in: L.A. Paquette, Encyclopeidia of Reagents for Organic Synthesis, J. Wiley & Sons, Chichester 1995, 3172 - 3176; J.D. Odom, in: Comprehensive Organometallic Chemistry, G. Wilkinson (ed.), Pergamon Press 1982, Vol. 1, S. 297).

Einige Vertreter der Alkalimetallmonohydridoboranate, und -aluminate können durch Addition von Alkalimetallhydrid (MH) an die $EX^1X^2X^3$-Verbindung erhalten werden. Dies gilt z.B. für die Herstellung von $Li[HBEt_3]$ gemäß

$$LiH + BEt_3 \xrightarrow{\text{(Lösungsmittel)}} Li[HBEt_3] \qquad (1)$$

mit Et = Ethyl.

Ohne Lösungsmittel oder mit einem Kohlenwasserstoff als Lösungsmittel dauert die Reaktion bei 200 °C ca. 4 Std., mit $Et_2O$ als Lösungsmittel dauert die Reaktion bei Erhitzen am Rückfluß ca. 24 Std. (R. Köster, "Anionische Organobor-Wasserstoff-Verbindungen" in: Houbert-Weyl, Methoden der organischen Chemie 13/3b, S. 798-813, G. Thieme Verlag, Stuttgart, 1983). In THF-Lösung läßt sich die Addition innerhalb eines Tages bei Raumtemperatur bewerkstelligen.

Problematisch ist die Induktionszeit der Reaktion. Auch versagt diese Methode beim Einsatz sperrig substituierter Borane. Z.B. ergibt die Reaktion von $B(^sBu)_3$ mit Alkalimetallhydriden in siedendem THF nach 24 Std. lediglich 10 % Umsatz, weshalb diese Reaktion für eine kommerzielle Synthese ungeeignet ist. (H.C. Brown, S. Krishnamurthy, J.L Hubbard, J. Am. Chem. Soc. 1978, 100, 3343; R. Köster, "Anionische Organobor-Wasserstoff-Verbindungen" in: Houben-Weyl, Methoden der organischen Chemie 13/3b, S. 798-813, G. Thieme Verlag, Stuttgart, 1983; J.L. Hubbard, "Lithium tri-s-butylborohydride" in: L.A. Paquette, Encyclopeidia of Reagents for Organic Synthesis, J. Wiley & Sons, Chichester 1995, 3172 - 3176; J.D. Odom, in: Comprehensive Organometallic Chemistry, G. Wilkinson (ed.), Pergamon Press 1982, Vol. 1, S. 297).

Noch sperriger substituierte Borane sind gegen "normales", d.h. kommerziell erhältliches NaH und LiH in siedendem THF inert. Dies gilt nicht für die hochreaktive Form der binären Hydride, wie sie z.B. durch Zersetzung von Alkyllithiumlösungen unter Wasserstoffatmosphäre hergestellt werden. (R. Pi, T. Friedl u. P.v.R. Schleyer, J. Org. Chem. 1987, 52, 4299-4304). Weil das aktive Metallhydrid zunächst aus teuren Organolithiumlösungen hergestellt werden

muß, besitzt dieses Verfahren wenig kommerzielles Interesse.

Eine weitere Variante, aktives Metallhydrid herzustellen, besteht darin, das Metall vorzugsweise in feinverteilter Form in Gegenwart einer trisubstituierten Borverbindung herzustellen, so daß sich das in situ gebildete Hydrid MH sofort an die Borverbindung unter Bildung eines Borhydrids der Formel $M[R^1R^2R^3B]H$ anlagern kann. Nachteilig ist in diesem Fall, daß das Metall in Form eines hochreaktiven, schwierig zu handhabenden Pulvers vorliegen muß und zur Erzielung vernünftiger Reaktionstemperaturen und -zeiten eine Katalysatorkombination- in Form eines Übergangsmetallsalzes (z. B. $FeCl_3$) und/oder Polyaromaten (z. B. Phenanthren) eingesetzt werden muß (US-PS 5886229). Die Produktlösungen sind demzufolge verunreinigt und durch den Übergangsmetallgehalt verfärbt.

Auch sperrig substituierte Trialkoxyelementhydride setzen sich nicht oder nur extrem langsam mit MH um. Beispielsweise ist die Herstellung von Lithium-tri-tert-butoxyaluminiumhydrid (LTTBA) gem.

$$LiH + Al(O^tBu)_3 \not\longrightarrow Li[HAl(O^tBu)_3] \qquad (2)$$

unbekannt (siehe auch Vergleichsbeispiel A).

Da die direkte Herstellung nicht möglich ist, wurden eine Reihe Verfahrensaltemativen erarbeitet. So wird LTTBA durch Alkoholyse von Lithiumaluminiumhydrid gem.

$$LiAlH_4 + 3\ {}^tBuOH \xrightarrow{THF} Li[HAl(O^tBu)_3] + H_2 \qquad (3)$$

hergestellt.

Nachteilig sind die hohen Herstellkosten, da relativ teurer Hydridwasserstoff im $LiAlH_4$ durch die Alkoholyse zerstört wird.

Trialkylborhydride mit sperrigen Organoresten werden nach einem der folgenden allgemeinen Verfahren hergestellt:

$$R_3B + LiAlH(OMe)_3 \xrightarrow{Ether} [R_3BH]Li + [Al(OMe)_3]_x \downarrow \qquad (4)$$

$$R_3B + LiAlH_4 \xrightarrow[0\ °C]{DABCO/THF} [R_3BH]Li + AlH_3 \cdot DABCO \downarrow \qquad (5)$$

(DABCO = 1,4-Diazabicyclo[2,2,2]octan)

$$R_3B + (H_3C)_3C\text{-}Li \xrightarrow[-78\ °C]{THF} [R_3BH]Li + C_4H_8 \uparrow \qquad (6)$$

Nachteil des Verfahrens gem. (4) ist der Einsatz des teuren, nicht kommerziell erhältlichen $LiAlH(OMe)_3$ und vor allem der Anfall großer Mengen unlöslichen Aluminiummethylats, welches die Reindarstellung des Trialkylborhydrids außerordentlich erschwert. Ähnliches gilt für Verfahren (5), zusätzlich kommen hohe Kosten für den Donor wie

z.B. 1,4-Diazabicyclo[2,2,2]octan (DABCO) hinzu.

Verfahren (6) hat zum Nachteil, daß teures t-Butyllithium als LiH-Quelle benützt wird, wobei ein gasförmiges Nebenprodukt entsteht. Zudem muß die Reaktion bei sehr tiefen Temperaturen durchgeführt werden, was energetisch sehr ungünstig ist.

Alle Verfahren (3) - (6) haben den Nachteil, daß sie praktisch auf die Herstellung des Lithiumderivates beschränkt sind, da nur die entsprechenden Lithium-Rohstoffe (aber nicht die Na- oder K-Verbindungen) im Handel erhältlich sind. Die Addition der höheren Alkalimetallhydride (NaH, KH, RbH, CsH) an eine Ausgangsverbindung $EX^1X^2X^3$ verläuft zwar wesentlich schneller als bei LiH, jedoch nimmt auch in diesen Fällen die Reaktionsgeschwindigkeit mit zunehmendem Volumen der Substituenten X stark ab (siehe Vergleichsbeispiel B).

Aufgabe der Erfindung ist es, die Nachteile des Standes der Technik zu überwinden und ein Verfahren zur schnellen Herstellung von Alkalimetallmonohydridoboranaten und -aluminaten der allgemeinen Formel

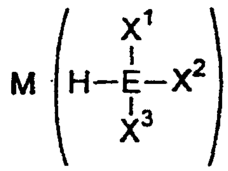

(A)

bei milden Temperaturen zu schaffen, das von kommerziell verfügbarem Alkalimetallhydrid ausgeht, eine Reaktionsführung ohne Überdruck ermöglicht und die Bildung von unlöslichen Nebenprodukten vermeidet.

Die Aufgabe wird durch das in Anspruch 1 angegebene Verfahren gelöst. Die Ansprüche 2 bis 11 bilden das angegebene Verfahren weiter. Anspruch 12 gibt bevorzugte Verfahrensprodukte und Anspruch 13 gibt eine Verwendung der nach dem erfindungsgemäßen Verfahren hergestellten Verbindungen an.

Es wurde gefunden, daß die oben beschriebene Addition von Alkalimetallhydrid (MH) an eine $EX^1X^2X^3$-Verbindung durch einen Katalysator bedeutend beschleunigt wird:

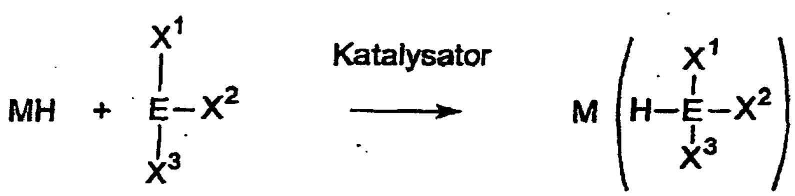


mit M = Li, Na, K, Rb oder Cs, und

E = B oder Al, und

$X^1$, $X^2$, $X^3$ = jeweils unabhängig voneinander

eine aus 2 bis 10 C-Atomen bestehende sekundäre oder tertiäre Alkylgruppe, oder

eine Phenylgruppe, die ihrerseits alkylsubstituiert sein kann, oder eine Alkoxygruppe.

Als Katalysator kann jede Bor-haltige Verbindung eingesetzt werden, die die Struktureinheit $BH_3$ enthält und die selbst oder deren Umsetzungsprodukt mit MH in der Lage ist, als Hydridüberträger zu wirken.

$X^1$, $X^2$, $X^3$ können bevorzugt sein jeweils unabhängig voneinander iso-Propyl oder sec-Butyl oder tert-Butyl oder tert-Amyl oder Siamyl (sec-2-Methyl-butyl) oder eine Phenylgruppe, die ihrerseits alkylsubstituiert sein kann, oder folgende Alkoxygruppe

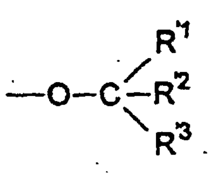

mit $R'^1$, $R'^2$, $R'^3$ = unabhängig voneinander Alkyl mit 1 bis 10 C-Atomen.

Im Falle von flüssigen Verbindungen $EX^1X^2X^3$ kann die Reaktion prinzipiell ohne Lösungsmittel durchgeführt werden; das Arbeiten in einem Lösungsmittel ist jedoch bevorzugt, bzw. in den Fällen, in denen $EX^1X^2X^3$ nicht flüssig

ist, unumgänglich. Als Lösungsmittel dienen aprotische organische Verbindungen, wie z.B. Kohlenwasserstoffe und/ oder Ether. Die Reaktion verläuft in polaren Lösungsmitteln schneller als in unpolaren Kohlenwasserstoffen.

Die Reihenfolge der Zugabe der einzelnen Reaktionspartner spielt prinzipiell keine Rolle. Bevorzugt wird die Gesamtmenge MH im Lösungsmittel suspendiert, der Katalysator zugegeben und die Verbindung $EX^1X^2X^3$ abhängig von der Reaktionsgeschwindigkeit zudosiert.

Gut eignen sich als Katalysator Borankomplexe $H_3B \cdot D$ mit einer Donorverbindung D. Als Donorverbindung können z.B. Amine, bevorzugt sekundäre Amine, eingesetzt werden.

Auch Aminoborhydride der allgemeinen Formel

$$M[R^2R^1NBH_3]_n \quad (D)$$

mit M = Li, Na, K, Rb, Cs oder MgHalogen bei n = 1,
oder M = Mg bei n = 2, und

$R^1$, $R^2$ = unabhängig voneinander H, Alkyl oder Aryl, wobei $R^1$ und $R^2$ über einen Ringschluß miteinander verbunden sein können.

oder

$$M[R^2R^1NBH_2NR^3R^4BH_3]_n \quad (E)$$

mit M = Li, Na, K, Rb, Cs oder MgHalogen bei n = 1,
oder M = Mg bei n = 2, und
$R^1$, $R^2$, $R^3$, $R^4$ = unabhängig voneinander H, Alkyl oder Aryl, wobei $R^1$, $R^2$, $R^3$ und/oder $R^4$ über einen Ringschluß miteinander verbunden sein können,
können als Katalysator eingesetzt werden.

Der Katalysator wird im allgemeinen in einer Menge von 0,1 bis 20 mol% eingesetzt, wobei es sich in Einzelfällen als günstig erweisen kann, die Dosierung noch höher zu wählen. Bevorzugt wird der Katalysator in einer Menge von 0,5 bis 5 mol% eingesetzt.

Die Temperatur der Reaktion beträgt je nach Substrat und Lösungsmittel 0 bis 150 °C.

Das erfindungsgemäße Verfahren hat den Vorteil, daß sich Alkalimetallmonohydridoboranate und -aluminate aus kommerziellen Alkalimetallhydriden in einfacher Weise, schnell und ohne Anwendung von Druck herstellen lassen. Insbesondere die Alkalimetallmonohydridoboranate und - aluminate mit sterisch voluminösen Substituenten sind auf diese Weise einer Synthese zugänglich.

Bevorzugt können nach dem erfindungsgemäßen Verfahren als Verbindung (A) Alkalimetall-tri-tert-butoxyaluminiumhydrid oder ein Alkalimetall-tri-sec-butylborhydrid oder Alkalimetall-tri-(sec-2-Methyl-butyl)-borhydrid erhalten werden.

Verwendung finden die nach dem erfindungsgemäßen Verfahren hergestellten Alkalimetallmonohydridoboranate und -aluminate als Reduktionsmittel in der organischen Synthese.

Die Erfindung wird im folgenden anhand von Beispielen näher erläutert.

**Beispiel 1: Herstellung von Lithium-tri-tert-butoxyaluminiumhydrid $Li[HAl(O^tBu)_3]$ in THF/Toluol mit Katalysator Lithium-dimethylaminoborhydrid $Li[Me_2NBH_3]$ (LiDMAB)**

Zuerst wurde die Katalysatorlösung wie folgt hergestellt: in einem 1 l-Reaktor wurden 7,41 g (1,07 mol) Lithiummetallgranulat in 277 g wasserfreiem THF suspendiert. Unter Rühren wurde ein Gemisch bestehend aus 68 g Dimethylaminboran (DMAB), 39,5 g Isopren und 116 g THF innerhalb 2 Stunden zudosiert. Durch äußere Kühlung wurde die Reaktorinnentemperatur auf 22 bis 27 °C eingestellt.

Nach einer zweistündigen Nachreaktionszeit bei ca. 25 °C wurden die geringfügigen Lithiummetallreste abfiltriert.

Ausbeute: 363 g mit Li-Gehalt 1,89 % (entspricht 92 % der Theorie)
$\delta^{11}B$: 14,2 ppm, Quartett

In einem 1-l-Doppelmantelreaktor mit Intensivkühler, KPG-Rührer und Thermoelement wurden 243 g einer 24,9 %igen $Al(O^tBu)_3$-Lösung (242 mmol) in THF/Toluol vorgelegt und mit 2,2 g (278 mmol) LiH-Pulver sowie 2,0 g der oben hergestellten Lösung von LiDMAB in THF (Konzentration 2,7 mmol/g, 2,0 g Lösung entsprechen 5,6 mmol

LiDMAB =2,3 mol% bezogen auf Edukt) versetzt und zum Rückfluß erhitzt.

Nach jeweils einer, zwei und drei Stunden wurden Proben entnommen und per $^{27}$Al-NMR auf Reaktionsfortschritt geprüft. Dabei zeigte sich, daß die Reaktion bereits nach einer Stunde im wesentlichen abgeschlossen war. Nach 2 Stunden war das gewünschte Produkt ($\delta^{27}$Al = 78,2 ppm) mit einer spektroskopischen Reinheit von ≥ 90 % entstanden. Die trübe Lösung wurde über eine G2-Glasfilterfritte filtriert (30 min) und analysiert.

| | |
|---|---|
| Ausbeute: | 284 g klare gelbliche Lösung |
| Gasvolumetrie: | $H^-$ = 0.781 mmol/g ^ 222 mmol (^ 92 % der Theorie) |

**Vergleichsbeispiel A: Herstellversuch von Li[HAl(O$^t$Bu)$_3$], ohne Katalysator**

In einem 100 ml-2-Halsschlenkkolben mit Rückflußkühler und Temperaturmeßfühler wurden 35 g einer 30 %igen Lösung von Aluminium-tert-butylat (entspricht 43 mmol) in THF/Toluol (1:1,6) vorgelegt und mit 0,70 g (88 mmol) gemahlenem Lithiumhydrid versetzt. Es wurde drei Stunden refluxiert (Innentemperatur 97 °C).

Nach Abkühlung auf Raumtemperatur wurde eine Probe untersucht:

Gasvolumetrie (filtrierte Probe): nicht nachweisbar

| | |
|---|---|
| $\delta$ $^{27}$Al : | 49,1 ppm (von Al(O$^t$Bu)$_3$) |
| | keine Spuren des Produktpeaks bei 78 ppm |

**Beispiel 2: Herstellung von Lithium-tri-sec-butylborhydrid in THF mit Katalysator LiDMAB**

In einem 1-l-Doppelmantelreaktor wurden 7,5 g LiH (0,94 Mol) in 540 g THF suspendiert und mit 8,0 g der in Beispiel 1 hergestellten Katalysatorlösung (Konzentration 1,05 mmol/g, 8,0 g Lösung entsprechen 8,4 mmol LiDMAB = 0,96 mol% bezogen auf Edukt) versetzt. Danach wurde die Zudosierung von Tri-sec-butylboran (insgesamt 159 g, 875 mmol) gestartet Die Reaktionstemperatur stieg dabei von ca. 25 auf > 30 °C. Nach Beendigung der Zugabe wurde 1 Stunde am Rückfluß gekocht.

Nach Abkühlung wurde die Lösung über eine Glasfritte filtriert.

| | |
|---|---|
| Ausbeute: | 690 g Lösung mit 1,23 mmol/g Aktivwasserstoffgehalt (97 % der Theorie) |
| | $\delta^{11}$B: -6,8 ppm, d $^1$J(B-H) = 540 Hz |
| | Reinheit (bezogen auf Borspezies): ca. 97 % |

**Beispiele 3 bis 7: Herstellung von Lithium-tri-sec-butylborhydrid in verschiedenen Lösungsmitteln und mit unterschiedlichen Katalysatoren**

Analog Beispiel 2 wurde Lithium-tri-sec-butylborhydrid in verschiedenen Lösungsmitteln und mit unterschiedlichen Katalysatoren hergestellt. Nähere Angaben finden sich in der Tabelle 1.

Der Katalysator MgDMAB (ClMg[$Me_2NBH_3$]) wurde wie folgt hergestellt:

In einem 0,1 l-Kolben wurden 2,95 g (50 mmol) Dimethylaminboran in 8,5 g THF gelöst und mit einem Wasserbad auf ca. 10 °C gekühlt. Mit einer Spritze wurden innerhalb 15 Minuten 19,2 g einer 25 %-igen Ethylmagnesiumchloridlösung (54 mmol) zudosiert. Das Reaktionsgemisch erwärmte sich dabei auf bis zu 35 °C. Es entwich ein Gas (Ethan).

Nach einstündigem Rühren bei Raumtemperatur wurde eine Probe entnommen und NMR-spektroskopisch untersucht.

$\delta$11B: 15,5 ppm (Quartett)

**Beispiele 8 und 9 und Vergleichsbeispiel B: Herstellung von Natrium-tri-sec-butylborhydrid in verschiedenen Lösungsmitteln und mit unterschiedlichen Katalysatoren, bzw. ohne Katalysator**

Analog Beispiel 2 wurde Natrium-tri-sec-butylborhydrid in verschiedenen Lösungsmitteln und mit unterschiedlichen Katalysatoren hergestellt. Nähere Angaben finden sich in der Tabelle 2.

Der Katalysator NaDADB (Natriumdiaminodiborat, Na[$Me_2NBH_2NMe_2BH_3$]) wurde wie folgt hergestellt:

In einem 250 ml-Zweihalskolben wurden 46,4 g einer Abmischung aus Natrium und Aluminiumoxid (9,2 % Na, entspr. 171 mmol) in 150 ml THF suspendiert und unter Rühren innerhalb von 100 min mit einer Lösung von 10,4 g (176 mmol) Dimethylaminboran (DMAB) in 60 ml THF versetzt. Unter z. T. heftiger Gasentwicklung (Wasserstoff) erhitzte sich die Reaktionsmischung auf bis zu 38 °C. Nach einstündigem Nachrühren bei Zimmertemperatur wurde das $Al_2O_3$ abfiltriert.

Es wurden 146 g Lösung mit einem Na-Gehalt von 0,52 mmol/g erhalten
(Ausbeute: 86 % bezogen auf DMAB)
$\delta^{11}B$: 2,1 ppm (Triplett); 14,3 ppm (Quartett) Intensitätsverhältnis 1:1

**Tab.1: Herstellung von Lithium-tri-sec-butylborhydrid**

| Beispiel | Einsatzstoffe $B(^sBu)_3$ g/mmol | Einsatzstoffe LiH mmol | Katalysator Art[1)] | Katalysator Menge mmol / | Katalysator Menge mol% | Lösungsmittel | Reaktions-zeit min | Reaktions-temp. °C | Ausbeute[2)] % |
|---|---|---|---|---|---|---|---|---|---|
| 3 | 9,2/50 | 64 | LiDMAB | 4,9 | 10 | 1,2-Dimethoxyethan | 15 | 60 | 28 |
| 4 | 27,6/152 | 180 | LiDMAB | 9 | 6 | $Et_2O$/THF (5,5:1) | 180 | ca. 45 | 42 |
| 5 | 4,6/25 | 27 | LiMAB | 4 | 16 | THF | 15 | 65 | 51 |
| | | | | | | | 700 | 25 | 98 |
| 6 | 9,1/50 | 64 | MgDMAB | 5,1 | 5 | THF | 120 | 65 | 100 |
| 7 | 9,8/54 | 60 | DMAB | 5,3 | 5 | THF | 120 | 65 | 100 |

1) LiDMAB = $Li[Me_2NBH_3]$
LiMAB = Lithium morpholinoborhydrid, Herstellung analog LiDMAB nach Beispiel 1
MgDMAB = $ClMg[Me_2NBH_3]$
DMAB = $Me_2NHBH_3$.

2) nach $^{11}$B-NMR-Spektroskopie

**Tab. 2: Herstellung von Natrium-tri-sec-butylborhydrid**

| Beispiel | Einsatzstoffe | | Katalysator | | | Reaktions- | | Ausbeute 2) |
|---|---|---|---|---|---|---|---|---|
| | $B(^sBu)_3$ g/mmol | NaH mmol | Art 1) | Menge mmol / | mol% | Zeit Min | temp. °C | % |
| 8 | 16,9/93 | 100 | LiDMAB | 7,8 | 8 | 10 | 20-65 3) | 100 |
| 9 | 14,6/80 | 100 | NaDADB | 5,6 | 7 | 10 | 20-65 3) | 100 |
| B | 14,6/80 | 100 | ./. | ./. | ./. | 40 | 65 | 90 |
| | | | | | | 100 | 65 | 97 |

1) LiDMAB = $Li[Me_2NBH_3]$
NaDADB= $Na[Me2NBH_2NMe_2BH_3)$

2) nach $^{11}B$-NMR-Spektroskopie

3) nach Katalysatorzugabe erhitzt sich Reaktionsgemisch ohne äußere Wärmezufuhr kurzfristig bis zum Siedepunkt

Den Beispielen 3 und 4 (Tabelle 1) ist zu entnehmen, daß als Lösungsmittel neben reinem THF bzw. einem THF/Toluol-Gemisch (wie in den vorhergehenden Beispielen 1 und 2) auch 1,2-Dimethoxyethan sowie THF/Diethylether-Mischungen verwendbar sind.

Beispiel 5 zeigt die Verwendungsmöglichkeit eines Lithiumaminoborhydrid-Katalysators mit zyklischem Aminorest. In diesem Fall wurde die Reaktion auch bei zwei unterschiedlichen Temperaturen durchgeführt anfangs am Siedepunkt, wobei für einen ca. 50 %-igen Umsetzungsgrad nur 15 Minuten benötigt wurden. Die restliche Umsetzung wurde durch Rühren bei Raumtemperatur (über einen entsprechend längeren Zeitraum) bewerkstelligt.

Die Beispiele 6 und 7 zeigen den Einsatz verschiedener anderer Katalysatoren. Sowohl das Chloromagnesiumaminoborhydrid als auch Dimethylaminboran führen in siedendem THF innerhalb von 2 Stunden zu einer quantitativen Umsetzung zum gewünschten Produkt.

In den Beispielen 8 und 9 und dem Vergleichsbeispiel B (Tabelle 2) werden Experimente zur Herstellung von Natrium-tri-sec-butylborhydrid beschrieben. Ohne Katalysator (Vergleichsbeispiel B) muß etwa 40 Minuten refluxiert werden, um einen 90 %-igen Umsetzungsgrad zu erreichen. Die Reaktion ist jedoch wesentlich schneller als bei der analogen Herstellung des Lithiumderivates (10 % Umsetzung nach 24 stündigem Rühren unter Rückflußbedingungen).

Werden zur Reaktionsbeschleunigung erfindungsgemäß Katalysatoren wie LiDMAB, bzw. ein Diaminodiboranat (Beispiele 9 und 10) eingesetzt, so ist eine wesentliche Verkürzung der Reaktionszeiten - zu beobachten. Die Aktivität der Katalysatoren äußert sich auch darin, daß sich die Reaktionsgemische direkt nach der Zugabe ohne äußere Wärmeeinwirkung bis zum Siedepunkt erhitzen; dies deutet auf eine extrem schnelle Reaktion hin.

## Patentansprüche

**1.** Verfahren zur Herstellung von Verbindungen der allgemeinen Formel

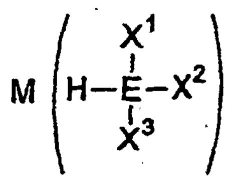

(A)

durch Umsetzung eines Alkalimetallhydrids mit einer Verbindung

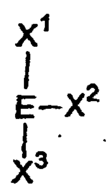

(B)

**dadurch gekennzeichnet, daß** die Umsetzung in Gegenwart eines Borhaltigen Katalysators durchgeführt wird, wobei
M = Li, Na, K, Rb oder Cs ist, und
E = B oder Al ist, und
$X^1$, $X^2$, $X^3$ = jeweils unabhängig voneinander
eine aus 2 bis 10 C-Atomen bestehende sekundäre oder tertiäre Alkylgruppe ist, oder
eine Phenylgruppe, die ihrerseits alkylsubstituiert sein kann, ist, oder
eine Alkoxygruppe ist, und
wobei der Bor-haltige Katalysator die Struktureinheit $BH_3$ enthält und der Bor-haltige Katalysator oder dessen Umsetzungsprodukt mit MH in der Lage ist, als Hydridüberträger zu wirken.

**2.** Verfahren nach Anspruch 1, **dadurch gekennzeichnet, daß**
$X^1$, $X^2$, $X^3$ = jeweils unabhängig voneinander
iso-Propyl oder sec-Butyl oder tert-Butyl oder tert-Amyl oder Siamyl (sec-2-Methyl-butyl) oder
eine Phenylgruppe, die ihrerseits alkylsubstituiert sein kann, oder folgende Alkoxygruppe

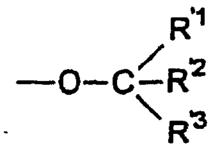

mit $R'^1$, $R'^2$, $R'^3$ = unabhängig voneinander Alkyl mit 1 bis 10 C-Atomen ist.

3. Verfahren nach Anspruch 1 oder 2, **dadurch gekennzeichnet, daß** die Umsetzung in einem aprotischen organischen Lösungsmittel durchgeführt wird.

4. Verfahren nach Anspruch 3, **dadurch gekennzeichnet, daß** das Lösungsmittel polar ist.

5. Verfahren nach einem der Ansprüche 1 bis 4, **dadurch gekennzeichnet, daß** der Bor-haltige Katalysator ein Borankomptex der allgemeinen

$$H_3B \cdot D \qquad (C)$$

Formel
mit D = Donorverbindung ist.

6. Verfahren nach Anspruch 5, **dadurch gekennzeichnet, daß** die Donorverbindung ein Amin ist.

7. Verfahren nach Anspruch 6, **dadurch gekennzeichnet, daß** die Donorverbindung ein sekundäres Amin ist.

8. Verfahren nach einem der Ansprüche 1 bis 4, **dadurch gekennzeichnet, daß** der Katalysator ein Aminoborhydrid der allgemeinen Formel

$$M[R^2R^1NBH_3]_n \qquad (D)$$

mit
M = Li, Na, K, Rb, Cs oder MgHalogen bei n = 1, oder M = Mg bei n = 2, und
$R^1$, $R^2$ = unabhängig voneinander H, Alkyl (mit 1 bis 10 C-Atomen) oder Aryl ist, wobei $R^1$und $R^2$ über einen Ringschluß miteinander verbunden sein können.

9. Verfahren nach einem der Ansprüche 1 bis 4, **dadurch gekennzeichnet, daß** der Katalysator ein Aminoborhydrid der allgemeinen Formel

$$M[R^2R^1NBH_2NR^3R^4BH_3]_n \qquad (E)$$

mit
M = Li, Na, K, Rb, Cs oder MgHalogen bei n = 1, oder M = Mg bei n = 2, und
$R^1$, $R^2$, $R^3$, $R^4$ = unabhängig voneinander H, Alkyl (mit 1 bis 10 C-Atomen) oder Aryl ist, wobei $R^1$, $R^2$, $R^3$, $R^4$ über einen Ringschluß miteinander verbunden sein können.

10. Verfahren nach einem oder mehreren der Ansprüche 1 bis 9, **dadurch gekennzeichnet, daß** der Katalysator in einer Menge von 0,1 bis 20 mol% eingesetzt wird.

11. Verfahren nach Anspruch 10, **dadurch gekennzeichnet, daß** der Katalysator in einer Menge von 0,5 bis 5 mol% eingesetzt wird.

12. Verfahren nach einem oder mehreren der Ansprüche 1 bis 11, **dadurch gekennzeichnet, daß** als Verbindung (A) Alkalimetall-tri-tert-butoxyaluminiumhydrid oder ein Alkalimetall-tri-sec-butylborhydrid oder Alkalimetall-tri-(sec-2-Methyl-butyl)-borhydrid erhalten wird.

**Claims**

1. Process for the preparation of compounds of the general formula

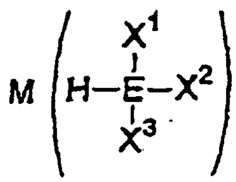

(A)

by reaction of an alkali metal hydride with a compound

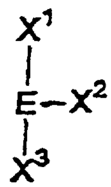

(B)

**characterized in that** the reaction is carried out in the presence of a boron-containing catalyst, wherein
M = Li, Na, K, Rb or Cs and
E = B or Al and
$X^1$, $X^2$, $X^3$ = in each case independently of one another
a secondary or tertiary alkyl group consisting of 2 to 10 C atoms or
a phenyl group, which in its turn can be alkyl-substituted, or
an alkoxy group and
wherein the boron-containing catalyst contains the structural unit $BH_3$ and the boron-containing catalyst or reaction product thereof with MH is capable of acting as a hydride transfer agent.

2. Process according to claim 1, **characterized in that** $X^1$, $X^2$, $X^3$ = in each case independently of one another iso-propyl or see-butyl or tert-butyl or tert-amyl or siamyl (sec-2-methyl-butyl) or
a phenyl group, which in its turn can be alkyl-substituted, or
the following alkoxy group

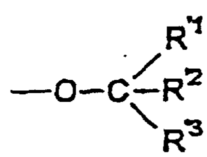

where $R'^1$, $R'^2$, $R'^3$ = independently of one another alkyl having 1 to 10 C atoms

3. Process according to claim 1 or 2, **characterized in that** the reaction is carried out in an aprotic organic solvent.

4. Process according to claim 3, **characterized in that** the solvent is polar.

5. Process according to one of claims 1 to 4, **characterized in that** the boron-containing catalyst is a borane complex of the general formula

$$H_3B{\bullet}D \qquad (C)$$

where D = donor compound.

6. Process according to claim 5, **characterized in that** the donor compound is an amine.

7. Process according to claim 6, **characterized in that** the donor compound is a secondary amine.

8. Process according to one of claims 1 to 4, **characterized in that** the catalyst is an aminoborohydride of the general formula

$$M\,[R^2R^1NBH_3]_n \qquad (D)$$

where
M = Li, Na, K, Rb, Cs or Mghalogen if n = 1 or M = Mg if n = 2 and
$R^1$, $R^2$ = independently of one another H, alkyl (having 1 to 10 C atoms) or aryl, wherein $R^1$ and $R^2$ can be bonded to one another via a ring closure.

9. Process according to one of claims 1 to 4, **characterized in that** the catalyst is an aminoborohydride of the general formula

$$M\,[R^2R^1NBH_2NR^3R^4BH_3]_n \qquad (E)$$

where
M = Li, Na, K, Rb, Cs or Mghalogen if n = 1 or M = Mg if n = 2 and
$R^1$, $R^2$, $R^3$, $R^4$ = independently of one another H, alkyl (having 1 to 10 C atoms) or aryl, wherein $R^1$, $R^2$, $R^3$, $R^4$ can be bonded to one another via a ring closure.

10. Process according to one or more of claims 1 to 9, **characterized in that** the catalyst is employed in an amount of 0.1 to 20 mol%.

11. Process according to claim 10, **characterized in that** the catalyst is employed in an amount of 0.5 to 5 mol%.

12. Process according to one or more of claims 1 to 11, **characterized in that** an alkali metal tri-tert-butoxyaluminium hydride or an alkali metal tri-sec-butyl borohydride or alkali metal tri-(sec-2-methyl-butyl) borohydride is obtained as compound (A).

## Revendications

1. Procédé de préparation de composés de formule générale

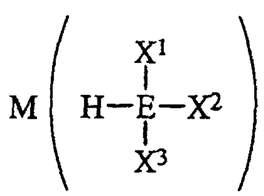

(A)

dans laquelle M représente Li, Na, K, Rb ou Cs, E représente B ou Al, et $X^1$, $X^2$ et $X^3$ représentent chacun indépendamment un groupe alkyle secondaire ou tertiaire, ayant 2 à 10 atomes de carbone, ou un groupe phényle qui peut être substitué de son côté par un groupe alkyle, ou un groupe alcoxy, par réaction d'un hydrure de métal

alcalin avec un composé de formule

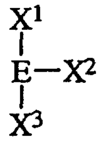 (B)

dans laquelle E, $X^1$, $X^2$ et $X^3$ ont les significations indiquées précédemment, **caractérisé en ce que** la réaction est réalisée en présence d'un catalyseur contenant du bore, le catalyseur contenant du bore renfermant l'unité structurale $BH_3$ et le catalyseur contenant du bore ou son produit de réaction avec MH étant à même d'agir comme transporteur d' hydrure.

**2.** Procédé selon la revendication 1, **caractérisé en ce que** $X^1$, $X^2$ et $X^3$ représentent chacun indépendamment un groupe isopropyle, sec-butyle, tert-butyle, tert-amyle ou siamyle(sec-2-méthyl-butyle), ou un groupe phényle qui peut être substitué par un groupe alkyle, ou un groupe alcoxy de formule

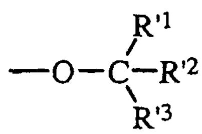

dans laquelle $R'^1$, $R'^2$ et $R'^3$ représentent chacun indépendamment un groupe alkyle ayant 1 à 10 atomes de carbone.

**3.** Procédé selon la revendication 1 ou 2, **caractérisé en ce que** la réaction est réalisée dans un solvant organique aprotique.

**4.** Procédé selon la revendication 3, **caractérisé en ce que** le solvant est polaire.

**5.** Procédé selon l'une quelconque des revendications 1 à 4, **caractérisé en ce que** le catalyseur contenant du bore est un complexe de borane de formule générale

$$H_3B \cdot D \quad (C)$$

dans laquelle D représente un composé donneur.

**6.** Procédé selon la revendication 5, **caractérisé en ce que** le composé donneur est une amine.

**7.** Procédé selon la revendication 6, **caractérisé en ce que** le composé donneur est une amine secondaire.

**8.** Procédé selon l'une quelconque des revendications 1 à 4, **caractérisé en ce que** le catalyseur est un aminoborohydrure de formule générale

$$M[R^2R^1NBH_3]_n \quad (D)$$

dans laquelle M représente Li, Na, K, Rb, Cs ou Mg-halogène lorsque n est égal à 1, ou bien M représente Mg lorsque n est égal à 2, et $R^1$ et $R^2$ représentent chacun indépendamment H, un groupe alkyle ayant 1 à 10 atomes de carbone ou un groupe aryle, $R^1$ et $R^2$ pouvant être reliés par cyclisation.

**9.** Procédé selon l'une quelconque des revendications 1 à 4, **caractérisé en ce que** le catalyseur est un aminoborohydrure de formule générale

$$M[R^2R^1NBH_2NR^3R^4BH_3]_n \qquad (E)$$

dans laquelle M représente Li, Na, K, Rb, Cs ou Mg-halogène lorsque n est égal à 1 ou bien M représente Mg lorsque n est égal à 2, et $R^1$, $R^2$, $R^3$ et $R^4$ représentent chacun indépendamment H, un groupe alkyle ayant 1 à 10 atomes de carbone ou un groupe aryle, $R^1$, $R^2$, $R^3$, $R^4$ pouvant être reliés par cyclisation.

**10.** Procédé selon une ou plusieurs des revendications 1 à 9, **caractérisé en ce que** le catalyseur est employé en une proportion de 0,1 à 20 % en moles.

**11.** Procédé selon la revendication 10, **caractérisé en ce que** le catalyseur est employé en une proportion de 0,5 à 5 % en moles.

**12.** Procédé selon une ou plusieurs des revendications 1 à 11, **caractérisé en ce que** l'on obtient comme composé (A) un tri-tert-butoxyaluminohydrure de métal alcalin ou un tri-sec-butylborohydrure de métal alcalin ou un tri(sec-2-méthyl-butyl)borohydrure de métal alcalin.